(19) Europäisches Patentamt
European Patent Office
Office européen des brevets

(11) **EP 4 783 163 A1**

(12) **EUROPEAN PATENT APPLICATION**

(43) Date of publication:
**29.07.2026 Bulletin 2026/31**

(21) Application number: **25214016.5**

(22) Date of filing: **06.11.2025**

(51) International Patent Classification (IPC):
**G10L 19/22** (2013.01)     **H04N 19/00** (2014.01)
**G06T 9/00** (2006.01)     G10L 19/02 (2013.01)

(52) Cooperative Patent Classification (CPC):
**G10L 19/22; G06T 9/00;** G10L 19/02

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **24.01.2025   KR 20250011823**

(71) Applicant: **Chung Ang University Industry
Academic
Cooperation Foundation
Seoul 06974 (KR)**

(72) Inventors:
• **LEE, Jung Ryun**
  **Seoul 06331 (KR)**
• **LEE, Ki Ho**
  **Yongin-si 16800 (KR)**

(74) Representative: **Botti & Ferrari S.p.A.**
  **Via Cappellini, 11**
  **20124 Milano (IT)**

(54)   **AI-BASED SEMANTIC COMMUNICATION METHOD AND APPARATUS**

(57)   An AI-based semantic communication apparatus, comprising: a processor; and a memory connected to the processor, wherein the memory stores program instructions which, when executed by the processor, cause the processor to: divide a user input signal into a plurality of tokens on a predetermined frame basis; calculate, based on artificial intelligence (AI), an importance of each of the plurality of tokens; compress first tokens having an importance greater than or equal to a predetermined threshold and second tokens having an importance greater than or equal to the predetermined threshold at different resolutions to generate feature data; and transmit the feature data.

FIG. 2

```
┌──────────────────────────────────────────────┐
│   TOKENIZATION OF INPUT AUDIO SIGNAL          │── S200
└──────────────────────────────────────────────┘
                      ↓
┌──────────────────────────────────────────────┐
│   CALCULATION OF TOKEN IMPORTANCE             │── S202
└──────────────────────────────────────────────┘
                      ↓
┌──────────────────────────────────────────────┐
│   COMPRESSION OF TOKENS AT DIFFERENT          │── S204
│   RESOLUTIONS ACCORDING TO IMPORTANCE         │
└──────────────────────────────────────────────┘
                      ↓
┌──────────────────────────────────────────────┐
│   TRANSMISSION OF COMPRESSED FEATURE DATA     │── S206
└──────────────────────────────────────────────┘
```

EP 4 783 163 A1

**Description**

**CROSS-REFERENCE TO RELATED APPLICATION**

This application claims priority under 35 U.S.C. §119 of Korean Patent Application No. 10-2025-0011823, filed on January 24, 2025, with the Korean Intellectual Property Office, the entire contents of which are incorporated herein by reference.

**BACKGROUND**

**(a) Technical Field**

The present disclosure relates to an artificial intelligence (AI)-based semantic communication method, apparatus, and system, and more particularly, to a technique for efficiently transmitting signals by preserving semantic fidelity while optimizing network bandwidth utilization.

**(b) Background Art**

In applications such as communication, voice assistants, virtual meetings, and telemedicine, audio codec technology is widely used. Conventional codecs, such as Adaptive Multi-Rate (AMR) and Opus, are designed to uniformly compress and transmit audio data without considering semantic importance.
Such uniform compression leads to two major drawbacks:

Bandwidth inefficiency, since all parts of the signal are encoded equally regardless of semantic importance; and

Loss of critical semantic information in poor network conditions, as significant parts of speech (e.g., key words or urgent phrases) may be degraded or lost.

Furthermore, existing codecs lack the capability to dynamically evaluate the semantic importance of tokens contained in an audio sequence and to adjust compression levels in real time.

**SUMMARY OF THE DISCLOSURE**

In order to solve the problems of the prior art described above, the present disclosure seeks to propose an AI-based semantic communication method and apparatus that enables high-quality signal transmission by efficiently utilizing network bandwidth while maintaining semantic fidelity.
To accomplish the above object, according to the present disclosure, the AI-based semantic communication apparatus, comprising: a processor; and a memory connected to the processor, wherein the memory stores program instructions which, when executed by the processor, cause the processor to: divide a user input signal into a plurality of tokens on a predetermined frame basis; calculate, based on artificial intelligence (AI) and attention score, an importance of each of the plurality of tokens; compress first tokens having an importance greater than or equal to a predetermined threshold and second tokens having an importance greater than or equal to the predetermined threshold at different resolutions to generate feature data; and transmit the feature data.
The program instructions are configured to: apply a modality-specific transform to a plurality of input frames to convert the frames into a latent representation domain; and apply a modality-adaptive embedding module to a result of the FFT to generate token embedding data at multiple levels.
The program instructions are configured to: apply a self-attention mechanism to the token embedding data input into a Transformer model to calculate, on the basis of attention, the importance of each of the plurality of tokens.
The program instructions are configured to: extract query (Q), key (K), and value (V) values from the plurality of tokens through a trained model by means of an attention mechanism; and calculate attention weights of the tokens by performing a scaled dot product of the query and the key and applying a softmax function.
The program instructions are configured to: apply the value (V) to the attention weights to calculate a weighted sum representing a contextual representation of each of the plurality of tokens; and calculate an importance of each token by summing the attention weights of the plurality of tokens and dividing the sum by a total number of the plurality of tokens.
The modality-adaptive embedding module is a Mel filter, the program instructions are configured to: apply different numbers of Mel filters to the first tokens and the second tokens to extract semantic information of speech at multiple levels.
The number of Mel filters applied to the first tokens is set to be n times greater than the number of Mel filters applied to the second tokens, where n is an integer of 2 or greater.

The program instructions are configured to: calculate the importance of each of the plurality of tokens by summing all attention scores directed toward the plurality of tokens itself and normalizing the sum by a total number of tokens.

Tokens having a higher importance are mapped to stable and high-priority channels in an Unequal Error Protection (UEP) communication system, such that more important tokens are transmitted through more reliable channels with higher priority.

According to another aspect of the present disclosure, a method for performing AI-based semantic communication in a device including a processor and a memory, the method comprising: dividing a user input signal into a plurality of tokens on a predetermined frame basis; calculating, based on artificial intelligence (AI) and attention score, an importance of each of the plurality of tokens; compressing first tokens having an importance greater than or equal to a predetermined threshold and second tokens having an importance greater than or equal to the predetermined threshold at different resolutions to generate feature data; and transmitting the feature data.

According to the present disclosure, feature values are transmitted at different resolutions depending on the importance of words, thereby efficiently utilizing network bandwidth while maintaining semantic fidelity.

## BRIEF DESCRIPTION OF DRAWINGS

FIG. 1 illustrates a configuration of an AI-based semantic communication system according to an embodiment of the present disclosure.

FIG. 2 illustrates a flowchart of an AI-based semantic communication process according to an embodiment of the present disclosure.

FIG. 3 illustrates a flowchart of a token importance evaluation process according to an embodiment of the present disclosure.

FIG. 4 illustrates the contributions of critical tokens, non-critical tokens, and the overall Mean Opinion Score (MOS) according to an embodiment of the present disclosure.

## DETAILED DESCRIPTION

Singular forms used in this specification include plural forms unless the context clearly indicates otherwise. In the specification, the term "configured", "include", or the like should not be construed as necessarily including several components or several steps described herein, in which some of the components or steps may not be included or additional components or steps may be further included. Further, the terms "~ unit", "module", and the like mean a unit for processing at least one function or operation and may be implemented by hardware or software or by a combination of hardware and software.

Hereinafter, the embodiments of the present disclosure will be described in detail with reference to the accompanying drawings.

The present embodiment relates to a semantic communication method that enables efficient utilization of network bandwidth while preserving semantic fidelity.

Semantic communication focuses on preserving the semantic information of the transmitted content rather than achieving exact reconstruction of the entire data.

For example, in conventional voice communication, the entire audio signal is uniformly encoded and transmitted with the objective of exact waveform reconstruction. In contrast, semantic communication emphasizes the transmission of critical information, such as specific keywords (e.g., "help," "emergency"), which carry essential meaning in a given context.

Transformer-based semantic communication technology has been applied in various fields, including natural language processing (NLP), speech processing, and image processing. In particular, such technology dynamically evaluates the semantic importance of input data through a self-attention mechanism.

The Transformer decomposes input data into tokens and identifies the contextual relationships of each token, assigning higher weights to tokens deemed more important.

The main components of the Transformer-based semantic communication according to the present embodiment include tokenization, self-attention, multi-head attention, and dynamic resource allocation.

Tokenization refers to dividing the input data into smaller units, called tokens, for processing, while self-attention calculates the importance of each token to emphasize semantically significant information.

Multi-head attention analyzes the importance of the input data from multiple perspectives, while dynamic resource allocation assigns more network resources to tokens with higher importance, thereby enabling efficient data transmission.

Unlike conventional signal processing-based approaches, Transformer-based semantic communication is capable of understanding the meaning of data and utilizing it to optimize network bandwidth.

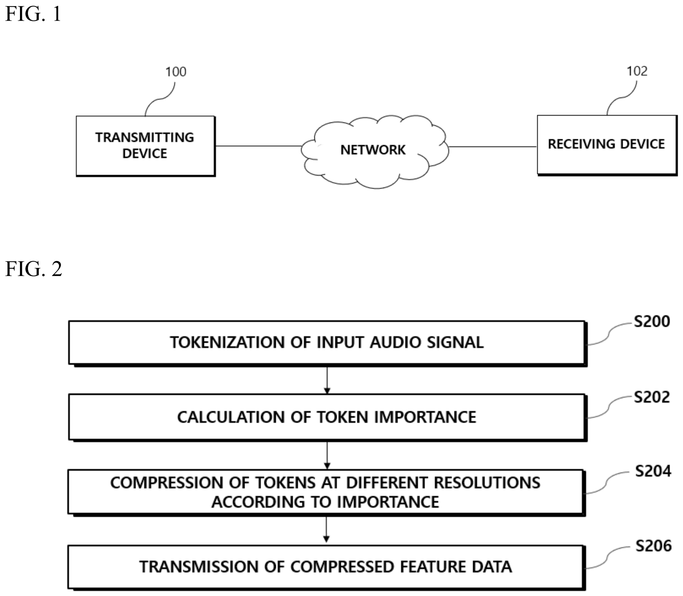

FIG. 1 illustrates a configuration of an AI-based semantic communication system according to an embodiment of the present disclosure.

As illustrated in FIG. 1, the semantic communication system according to the present embodiment may include a transmitting device (100) and a receiving device (102).

The transmitting device (100) and the receiving device (102) may be connected through a network, wherein the network may include a mobile communication network, a wired or wireless Internet network, and a satellite network.

The transmitting device (100) and the receiving device (102) may each include a processor and a memory storing program instructions for performing predetermined operations, wherein the processor executes the program instructions to enable AI-based semantic communication.

FIG. 2 illustrates a flowchart of an AI-based semantic communication process according to an embodiment of the present disclosure.

FIG. 2 illustrates a process performed by a transmitting device for semantic audio communication.

FIG. 2 illustrates, by way of example, a case in which the user input signal is an audio signal. However, it should be understood that the present invention is not limited to audio data alone, but is also applicable to multi-modal data such as image and video. In such cases, the importance of tokens corresponding to different modalities can likewise be calculated using attention-based mechanisms, and the proposed method of allocating high-importance tokens to prioritized transmission resources remains valid. Therefore, the extension of the present invention to multi-modal applications is considered to be included within the scope of the invention.

Referring to FIG. 2, the transmitting device (100) divides an input audio signal (input sequence) into frames and tokenizes the frames (step 200).

In step 200, the transmitting device (100) tokenizes the input audio signal into frames of a predetermined length, such as 25 ms, and generates consecutive frames by applying a predetermined overlap ratio.

Subsequently, a Fast Fourier Transform (FFT) is applied to each frame to convert the frame into a frequency domain, and a Mel filter bank is applied to the FFT result to generate a Mel-spectrogram.

When the user signal comprises multimodal data, the mel filter may be defined as a modality-adaptive embedding module.

Also, the foregoing FFT may be defined as a modality-specific transform, and the frequency domain may be defined as a latent representation domain.

Here, the Mel-spectrogram may be defined as token embedding data.

The Mel filter bank is a tool in audio signal processing that models human auditory characteristics to efficiently represent the frequency information of a signal. It converts frequencies into the Mel scale, thereby reflecting the property that human hearing is more sensitive to lower frequencies and less sensitive to higher frequencies.

Triangular-shaped filters designed on the basis of the Mel scale are densely arranged in low-frequency bands and more sparsely arranged in high-frequency bands, thereby emphasizing or attenuating energy in each frequency band.

Through the filter bank, spectral energy for each frequency band can be extracted, and subdivided feature values can be obtained at various levels, which is useful for analyzing the characteristics of an audio signal from multiple perspectives.

In particular, the Mel filter bank is utilized as an important preprocessing step in applications such as speech recognition, music signal processing, and acoustic event detection, and it plays an essential role in high-dimensional feature extraction such as Mel-frequency cepstral coefficients (MFCCs). The Mel filter bank is capable of converting complex signals into data at various levels according to their importance.

Subsequently, the transmitting device (100) calculates the importance of each token on the basis of attention through a self-attention mechanism of the Transformer model (step 202).

In step 202, token embedding data is input into the Transformer model, and the Transformer model evaluates the importance of each token through the self-attention mechanism.

The transmitting device (100) may calculate the importance of each of the plurality of tokens by summing all attention scores directed toward the plurality of tokens itself and normalizing the sum by a total number of tokens.

The transmitting device compresses tokens with high importance (critical tokens) at a high resolution, and compresses tokens with low importance (non-critical tokens) at a low resolution (step 204).

Here, the importance may be determined based on a predetermined threshold (for example, 0.5).

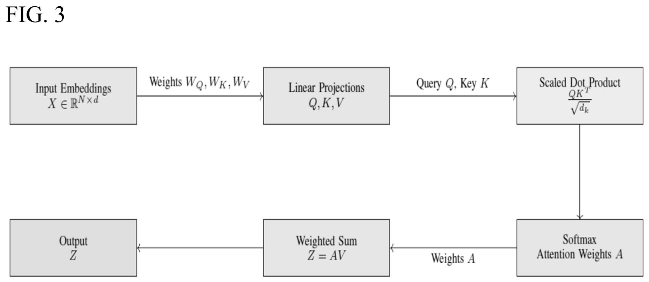

FIG. 3 illustrates a flowchart of a token importance evaluation process according to an embodiment of the present disclosure.

Referring to FIG. 3, each token of the input sequence *X* is transformed into three distinct vector spaces, namely a query (Q), a key (K), and a value (V), through linear projection. Such projections are computed using learnable weight matrices, as shown below.

[Equation 1]

$$Q = XW_Q, \quad K = XW_K, \quad V = XW_V$$

Here, $W_Q$, $W_K$, and $W_V$ represent the weight matrices for the query, key, and value, respectively, N denotes the number of tokens, and $d_k$ denotes the dimensionality of the query, key, and value vectors.

Next, the compatibility between tokens is calculated, and the token compatibility is computed as a scaled dot product of the query and key vectors, as shown below.

[Equation 2]

$$A = \text{softmax}\left(\frac{QK^T}{\sqrt{d_k}}\right)$$

Here, $A$ represents the attention weight, and the softmax function normalizes the weights.

A weighted sum is obtained by applying the value vector $V$ to the attention weight $A$.

[Equation 3]

$$Z = AV$$

Here, the weighted sum $Z$ represents the contextual representation of the token.

The importance score of each token is calculated by summing the attention weights over all tokens, as shown below.

[Equation 4]

$$I_i = \frac{1}{N} \sum_{j=1}^{N} A_{i,j}$$

Here, $I_i$ denotes the importance score of token $i$, and $j$ represents each token index.

A threshold $\theta$ is then applied to classify the tokens into high-importance tokens and low-importance tokens according to their importance scores.

In this formulation, the index $i \in \{1,2,...,N\}$ specifies the position of the target token whose importance is being evaluated within a sequence of N tokens, while the index $j \in \{1,2,...,N\}$ enumerates all tokens in the same sequence that contribute attention to token i. The attention weight $A_{i,j}$ quantifies how strongly token i attends to token j, and the summation aggregates these contributions across the entire sequence. By normalizing with the total number of tokens N, the importance score $I_i$ provides a measure of the average contextual relevance of token i. Consequently, tokens with higher values of $I_i$ are interpreted as carrying more semantically critical information and are therefore allocated to stable, high-priority transmission resources, such as unequal error protection (UEP) channels, whereas tokens with lower values may be transmitted with lower-priority or less protected resources.

In step 204, the number of Mel filters may be dynamically adjusted according to the importance of each token so as to generate high-resolution and low-resolution features.

In this case, the number of Mel filters applied to high-importance tokens may be set to n times, for example, two times, three times, or four times, greater than the number of Mel filters applied to low-importance tokens.

For example, 60 Mel filters may be applied to high-importance tokens, and 20 Mel filters may be applied to low-importance tokens, thereby optimizing the transmission size.

As different numbers of Mel filters are applied, each token may have a different transmission size in bytes. For example, when 60 Mel filters are applied, the transmission size may be 24 bytes, and when 20 Mel filters are applied, the transmission size may be 8 bytes.

This process is defined as extracting semantic information of speech at multiple levels. After such compression, the transmitting device (100) transmits the compressed feature data through the network (step 206).

The receiving device (102) that receives the compressed feature data decompresses the data and reconstructs the signal. The present embodiment maximizes the compression of low-importance information to reduce the overall transmission size while maintaining high semantic fidelity even in constrained network environments.

For example, the case in which the input audio is "The quick brown fox jumps over the lazy dog." will be described.

Table 1 shows the importance scores of the tokens included in the input audio.

[Table 1]

| Token | Importance Score |
|-------|------------------|
| The | 0.1455 |
| lazy | 0.1322 |
| over | 0.1280 |
| fox | 0.1165 |
| quick | 0.1028 |
| jumps | 0.0971 |
| dog | 0.0953 |
| brown | 0.0919 |
| the | 0.0905 |

A predetermined threshold may be set to 0.1, and the importance is determined according to the threshold.

Table 2 shows the token importance scores and corresponding compression levels.

[Table 2]

| Token | Importance Score | Mel Filters | Feature Size (Byte) |
|-------|------------------|-------------|---------------------|
| The | 0.1455 | 60 | 24 |
| lazy | 0.1322 | 60 | 24 |
| over | 0.1280 | 60 | 24 |
| fox | 0.1165 | 60 | 24 |
| quick | 0.1028 | 20 | 8 |
| jumps | 0.0971 | 20 | 8 |
| dog | 0.0953 | 20 | 8 |
| brown | 0.0919 | 20 | 8 |
| the | 0.0905 | 20 | 8 |

In the reconstructed audio, important words (for example, "The," "lazy," "over," and "fox") are encoded at 24 bytes per token and restored with high semantic fidelity, while less important words (for example, "quick," "jumps," "dog," "brown," and "the") are encoded at 8 bytes per token and restored with relatively lower quality, but without affecting semantic understanding.

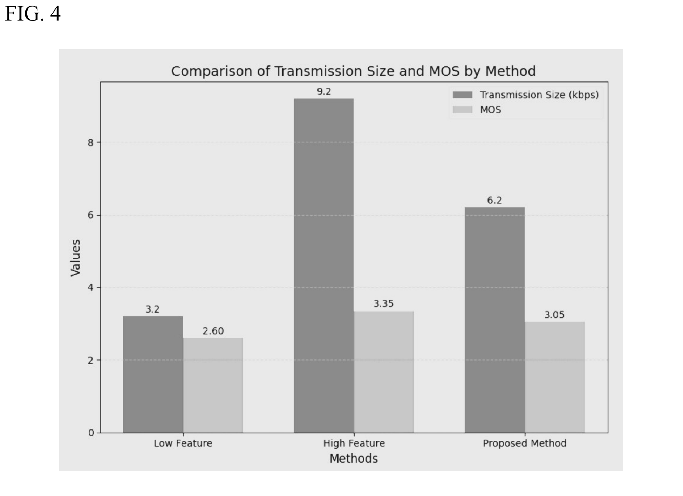

FIG. 4 illustrates the contributions of critical tokens, non-critical tokens, and the overall Mean Opinion Score (MOS) according to an embodiment of the present disclosure.

The method according to the present embodiment demonstrates the ability to significantly reduce the required bandwidth from 9.2 kbps to 6.2 kbps while maintaining a satisfactory MOS value (3 or higher), thereby showing a well-balanced trade-off between semantic fidelity and transmission requirements.

A computer-readable medium storing a computer program for performing the AI-based semantic audio communication method according to the present disclosure may be provided.

In addition, the above-described AI-based semantic audio communication method may be implemented as code readable by a computer on a computer-readable recording medium. The computer-readable recording medium may include any type of storage medium in which data decodable by a computer system is stored. Examples include Read Only Memory (ROM), Random Access Memory (RAM), magnetic tape, magnetic disk, flash memory, and optical data storage devices. Furthermore, the computer-readable recording medium may be distributed across computer systems connected via a communication network and stored and executed in a distributed manner as code readable by computers.

The embodiment of the present invention described above is disclosed for illustrative purposes, and those skilled in the art will appreciate that various modifications, alterations, and additions can be made within the spirit and scope of the invention. Such modifications, alterations, and additions should be construed as falling within the scope of the claims appended hereto.

**Claims**

1. An AI-based semantic communication apparatus, comprising:

   a processor; and
   a memory connected to the processor,
   wherein the memory stores program instructions which, when executed by the processor, cause the processor to:

   divide a user input signal into a plurality of tokens on a predetermined frame basis;
   calculate, based on artificial intelligence (AI) and attention score, an importance of each of the plurality of tokens;
   compress first tokens having an importance greater than or equal to a predetermined threshold and second tokens having an importance greater than or equal to the predetermined threshold at different resolutions to generate feature data; and
   transmit the feature data.

2. The apparatus of claim 1, wherein the program instructions are configured to:

   apply a modality-specific transform to a plurality of input frames to convert the frames into a frequency or latent representation domain; and
   apply a modality-adaptive embedding module to the resulting transformed data to generate token embedding data at multiple semantic levels.

3. The apparatus of claim 2, wherein the program instructions are configured to:
   apply a self-attention mechanism to the token embedding data input into a Transformer model to calculate, on the basis of attention, the importance of each of the plurality of tokens.

4. The apparatus of claim 3, wherein program instructions are configured to:

   extract query (Q), key (K), and value (V) values from the plurality of tokens through a trained model by means of an attention mechanism; and
   calculate attention weights of the tokens by performing a scaled dot product of the query and the key and applying a softmax function.

5. The apparatus of claim 4, wherein the program instructions are configured to:

   apply the value (V) to the attention weights to calculate a weighted sum representing a contextual representation of each of the plurality of tokens; and
   calculate an importance of each token by summing the attention weights of the plurality of tokens and dividing the sum by a total number of the plurality of tokens.

6. The apparatus of claim 2, wherein the modality-adaptive embedding module is a Mel filter,
   wherein the program instructions are configured to:
   apply different numbers of Mel filters to the first tokens and the second tokens to extract semantic information of speech at multiple levels.

7. The apparatus of claim 6, wherein the number of Mel filters applied to the first tokens is set to be n times greater than the number of Mel filters applied to the second tokens, where n is an integer of 2 or greater.

8. The apparatus of claim 1, wherein the program instructions are configured to calculate the importance of each of the plurality of tokens by summing all attention scores directed toward the plurality of tokens itself and normalizing the sum by a total number of tokens.

9. The apparatus of claim 1, wherein tokens having a higher importance are mapped to stable and high-priority channels in an Unequal Error Protection (UEP) communication system, such that more important tokens are transmitted through more reliable channels with higher priority.

10. A method for performing AI-based semantic communication in a device including a processor and a memory, the method comprising:

dividing a user input signal into a plurality of tokens on a predetermined frame basis;
calculating, based on artificial intelligence (AI) and attention score, an importance of each of the plurality of tokens;
compressing first tokens having an importance greater than or equal to a predetermined threshold and second tokens having an importance greater than or equal to the predetermined threshold at different resolutions to generate feature data; and
transmitting the feature data.

11. The method of claim 10, wherein dividing the user input signal comprises:

applying a Fast Fourier Transform (FFT) to a plurality of frames to convert the frames into a frequency domain; and
applying a modality-adaptive embedding module to a result of the FFT to generate Mel-spectrogram data.

12. The method of claim 11, wherein calculating the importance comprises applying a self-attention mechanism to token embedding data input into a Transformer model to calculate, on the basis of attention, the importance of each of the plurality of tokens.

13. The method of claim 12, wherein calculating the importance comprises:

extracting, through an attention mechanism and a trained model, a query (Q), a key (K), and a value (V) from each of the plurality of tokens; and
calculating an attention weight of each token by performing a scaled dot product of the query and the key and applying a softmax function.

14. The method of claim 13, wherein calculating the importance comprises:

applying the value (V) to the attention weights to calculate a weighted sum representing a contextual representation of each of the plurality of tokens; and
calculating the importance of each token by summing the attention weights of the plurality of tokens and dividing the sum by the total number of the plurality of tokens.

15. The method of claim 11, wherein generating the feature data comprises applying different numbers of Mel filters to the first tokens and the second tokens to extract semantic information of speech at multiple levels.

FIG. 1

FIG. 2

FIG. 3

| Input Embeddings $X \in \mathbb{R}^{N \times d}$ | Weights $W_Q, W_K, W_V$ → | Linear Projections $Q, K, V$ | Query $Q$, Key $K$ → | Scaled Dot Product $\frac{QK^T}{\sqrt{d_k}}$ |
|---|---|---|---|---|

| Output $Z$ | ← | Weighted Sum $Z = AV$ | ← Weights $A$ | Softmax Attention Weights $A$ |
|---|---|---|---|---|

FIG. 4

Comparison of Transmission Size and MOS by Method

## EUROPEAN SEARCH REPORT

Application Number

EP 25 21 4016

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2014/303968 A1 (WARD NIGEL [US] ET AL) 9 October 2014 (2014-10-09) | 1-5,8, 10-14 | INV. G10L19/22 |
| A | * paragraphs [0041], [0043], [0045], [0046], [0057], [0059] - [0061], [0065], [0066] * <br> * figures 1, 5-7 * | 6,7,9,15 | H04N19/00 G06T9/00 <br><br> ADD. G10L19/02 |
| X | US 2018/240221 A1 (RIJNDERS CHRISTIAAN ERIK [IT]) 23 August 2018 (2018-08-23) * paragraphs [0008] - [0010], [0036] - [0038], [0044] - [0046], [0100], [0101] * | 1,10 | |
| A | US 2015/363635 A1 (SURI NITIN [US] ET AL) 17 December 2015 (2015-12-17) * paragraphs [0002], [0016], [0019], [0046], [0066], [0067], [0071], [0074] * | 1-15 | |
| A | CHEN NAN ET AL: "Efficient Speech-to-Text Translation: Progressive Pruning for Accelerated Speech Pre-trained Model", 2024 IEEE INTERNATIONAL CONFERENCE ON MULTIMEDIA AND EXPO (ICME), IEEE, 15 July 2024 (2024-07-15), pages 1-6, XP034711166, DOI: 10.1109/ICME57554.2024.10688073 [retrieved on 2024-09-30] * section III * | 1-15 | **TECHNICAL FIELDS SEARCHED (IPC)** <br><br> G10L H04N G06T |

The present search report has been drawn up for all claims

| Place of search | Date of completion of the search | Examiner |
|---|---|---|
| Munich | 2 February 2026 | Geißler, Christian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

EP 4 783 163 A1

## ANNEX TO THE EUROPEAN SEARCH REPORT
## ON EUROPEAN PATENT APPLICATION NO.

EP 25 21 4016

02-02-2026

| Patent document cited in search report | Publication date | Patent family member(s) | | Publication date |
|---|---|---|---|---|
| US 2014303968 A1 | 09-10-2014 | NONE | | |
| US 2018240221 A1 | 23-08-2018 | CN | 110300977 A | 01-10-2019 |
| | | EP | 3364342 A1 | 22-08-2018 |
| | | EP | 3583547 A1 | 25-12-2019 |
| | | IL | 268214 A | 26-09-2019 |
| | | JP | 2020508010 A | 12-03-2020 |
| | | KR | 20190117651 A | 16-10-2019 |
| | | US | 2018240221 A1 | 23-08-2018 |
| | | WO | 2018150024 A1 | 23-08-2018 |
| US 2015363635 A1 | 17-12-2015 | AU | 2015274708 A1 | 17-11-2016 |
| | | BR | 112016028586 A2 | 22-08-2017 |
| | | CA | 2948529 A1 | 17-12-2015 |
| | | CN | 106462744 A | 22-02-2017 |
| | | EP | 3155557 A1 | 19-04-2017 |
| | | JP | 6694829 B2 | 20-05-2020 |
| | | JP | 2017528016 A | 21-09-2017 |
| | | KR | 20170018042 A | 15-02-2017 |
| | | MX | 376544 B | 07-03-2025 |
| | | US | 2015363635 A1 | 17-12-2015 |
| | | WO | 2015191650 A1 | 17-12-2015 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020250011823